# EUROPÄISCHE PATENTANMELDUNG

(11) **EP 1 046 570 A2**
(43) Veröffentlichungstag der Anmeldung: **25.10.2000**
(21) Anmeldenummer: 00105906.2
(22) Anmeldetag: 22.03.2000
(51) Int. Cl.: B62D 5/12, F15B 11/036

(54) **Hydraulisches Stellteil zur Betätigung der Lenkung von Kraftfahrzeugen**

(30) Priorität: 22.04.1999 DE 19918354
(71) Anmelder: Volkswagen Aktiengesellschaft, 38436 Wolfsburg (DE)
(72) Erfinder: Kreft, Jörg, Dipl.-Ing., 38126 Braunschweig (DE); Galla, Andreas, 38531 Rötgesbüttel (DE); Semmler, Carsten, 38126 Braunschweig (DE)

(57) **Zusammenfassung**

Es wird ein hydraulisches Stellteil (4) zur Betätigung der Lenkung von Kraftfahrzeugen vorgeschlagen, welches als Doppelzylindereinheit mit zwei Zylinderräumen (7, 8) ausgebildet ist. Auf einer gemeinsamen Kolbenstange (11) befinden sich mechanisch zwangsgekoppelte Kolben (9, 10). Beide Zylinderräume (7, 8) werden von separaten Hydraulikeinrichtungen (2, 3) gleichwirkend angesteuert, um einen Lenkeinschlag am Lenkrad (1) auf die lenkbaren Fahrzeugräder (5, 6) zu übertragen. Zwischen beiden Zylinderräumen (7, 8) befindet sich eine Trennkammer (14), die eine sichere Trennung beider Zylinderräume (7, 8) bewirkt.

## Beschreibung

Die Erfindung betrifft ein hydraulisches Stellteil zur Betätigung der Lenkung von Kraftfahrzeugen gemäß dem Oberbegriff des Anspruchs 1.

Es sind hydraulische Lenksysteme für Kraftfahrzeuge bekannt, bei denen ein am Lenkrad vorgenommener Lenkeinschlag über ein hydraulisches Stellteil in eine entsprechende Auslenkung der lenkbaren Fahrzeugräder umgesetzt wird. Zwischen Lenkrad und den lenkbaren Fahrzeugrädern besteht dabei keine mechanische Zwangskopplung. Derartige Lenkungssysteme sind auch unter dem Begriff 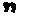 Steer by Wire" bekannt.

Aus der DE 196 27 893 C1 ist ein hydraulisches Lenksystem bekannt, bei dem die lenkbaren Fahrzeugräder von einem hydraulischen Stellteil betätigt werden, das als Doppelzylindereinheit mit zwei gleichachsig angeordneten und durch eine gemeinsame Kolbenstange zwangsgekoppelten Kolben ausgebildet ist. Die beiden Kolben befinden sich in unmittelbar hintereinander angeordneten Zylinderräumen, die über Steuerventile hydraulisch entsprechend dem jeweiligen Lenkeinschlag des Lenkrades angesteuert werden.

Die Betriebssicherheit eines solchen hydraulischen Lenksystems muß hohen Sicherheitsanforderungen gerecht werden, weshalb es erforderlich ist, daß sicherheitsrelevante Bauteile redundant ausgelegt werden. Das zur Betätigung der lenkbaren Fahrzeugräder verwendete hydraulische Stellteil wird daher als Doppelzylindereinheit ausgebildet, wobei die beiden Zylinder von getrennten Steuereinrichtungen gleichwirkend angesteuert werden. Die dabei verwendeten bekannten Doppelzylindereinheiten besitzen zwischen den unmittelbar aneinander angrenzenden Zylindern Dichtungselemente, die sicherstellen müssen, daß das unter Druck stehende Hydrauliköl nicht von einem zum anderen Zylinder gelangt. Eine Undichtigkeit zwischen beiden Zylindern würde eine gravierende Funktionastörung des gesamten hydraulischen Lenksystems darstellen.

Der Erfindung liegt die Aufgabe zugrunde, ein hydraulisches Stellteil zur Betätigung der Lenkung von Kraftfahrzeugen zu schaffen, das eine Doppelzylindereinheit mit zwei Zylinderräumen besitzt, deren hydraulische Abdichtung zueinander hohen Sicherheitsanforderungen gerecht wird.

Die Lösung dieser Aufgabe erhält man durch die im Anspruch 1 angegebenen Merkmale. Die Trennstelle zwischen den beiden Zylinderräumen ist als eine gegenüber den Zylinderräumen abgedichtete Trennkammer ausgebildet, so daß zwischen den beiden Zylinderräumen kein gemeinsames Dichtungselement liegt, sondern jeweils separate Dichtungselemente die Abdichtung zur Trennkammer sicherstellen. Wird ein zu einem Zylinderraum gehörendes Dichtungselement undicht, so hat dies keinen Einfluß auf die Funktion des anderen Zylinderraums und des dort einliegenden Kolbens, so daß das hydraulische Stellteil durch seine redundante Auslegung zur Betätigung der Lenkung weiterhin voll funktionsfähig bleibt. Eine an einem Dichtungsetement auftretende Undichtigkeit kann auch problemlos mittels entsprechenden Leck- oder Drucksensoren festgestellt und zur Anzeige gebracht werden.

Die Trennkammer befindet sich vorzugsweise auf Umgebungsdruck oder einem anderen niedrigen Druckniveau und kann über eine Ablaufleitung mit dem Tank der Hydraulikeinrichtungen in Verbindung stehen. Bei einer auftretenden Undichtigkeit zwischen Trennkammern und einem der beiden angrenzenden Zylinderräume kann das aus dem Zylinderraum in die Trennkammer gelangende Hydrauliköl eine Leckwarneinrichtung aktivieren. Eine Leckanzeige kann jedoch auch über Drucksensoren aufgrund des an einem Zylinderraum auftretenden Druckverlustes ausgelöst werden.

Die Trennkammer ist gegenüber den angrenzenden beiden Zylinderräumen vorzugsweise mittels Wellendichtringen abgedichtet, die die durchgeführte Kolbenstange dicht umschließen.

Die Erfindung wird nachfolgend anhand eines in der Zeichnung dargestellten Ausführungsbeispiels näher erläutert.

Es zeigen:
- Figur 1: den prinzipiellen Aufbau eines hydraulischen Lenksystems mit einem erfindungsgemäßen hydraulischen Stellteil,
- Figur 2: eine detaillierte Darstellung des hydraulischen Stellteils mit einer halbseitigen Längsschnitt-Ansicht und
- Figur 3: die in Figur 2 markierte Einzelheit E in vergrößerter Darstellung.

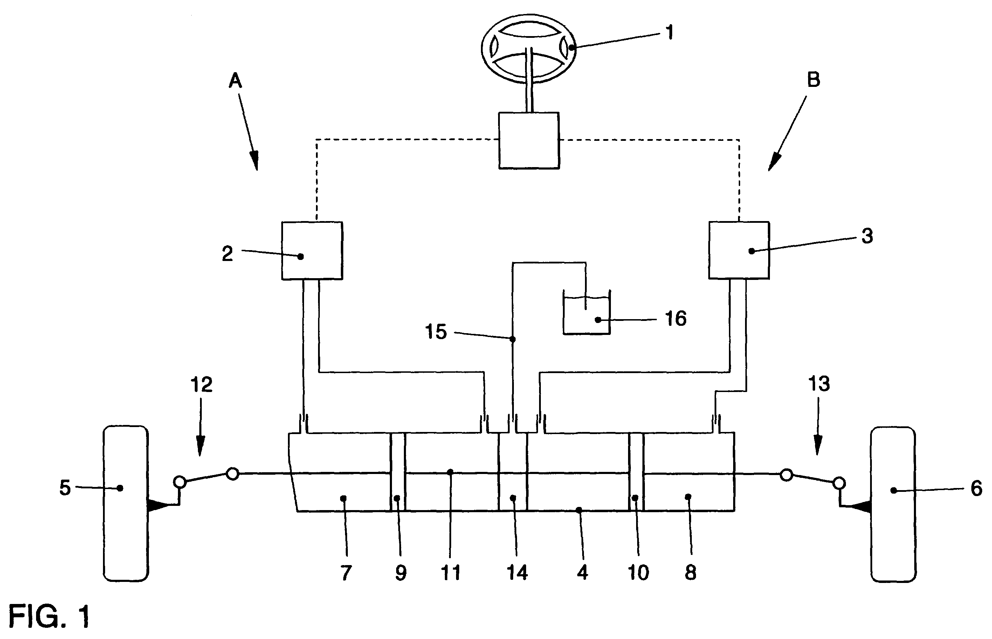

Bei dem in Figur 1 schematisch dargestellten hydraulischen Lenksystem wird der Lenkeinschlag eines Lenkrades 1 über zwei getrennte Hydraulikkreise A, B mit entsprechenden separaten Hydraulikeinrichtungen 2, 3 mittels eines hydraulischen Stellteils 4 auf die lenkbaren Fahrzeugräder 5, 6 übertragen.

Das hydraulische Stellteil 4 ist als Doppelzylindereinheit ausgebildet, deren beide Zylinderräume 7, 8 jeweils einen Kolben 9, 10 aufnehmen. Die Kolben 9, 10 sind auf einer gemeinsamen, durchgehenden Kolbenstange 11 angeordnet, die in ansich bekannter Weise auf Betätigungselemente 12, 13 an den lenkbaren Fahrzeugrädern 5, 6 wirkt.

Zwischen den beiden Zylinderräumen 7, 8 befindet sich eine Trennkammer 14, die über eine Ablaufleitung 15 mit dem Tank 16 der Hydraulikeinrichtungen verbunden ist. Die Trennkammer 14 ist mittels hier nicht näher dargestellten Dichtungselementen im Bereich der durchgeführten Kolbenstange 11 gegenüber den angrenzenden Zylinderräumen 7, 8 abgedichtet und befindet sich auf einem von den Zylinderräumen 7, 8 unabhängigen Druckniveau. Die Trennkammer 14 kann sich beispielsweise auf Umgebungsdruck befinden.

Das hydraulische Lenksystem ist bezüglich seiner sicherheitsrelevanten Einrichtungen redundant aufgebaut, so daß bei Ausfall eines der beiden Hydraulikkreise A oder B weiterhin eine sichere Lenkfunktion gewährleistet ist. Am Stellteil 4 bewirkt die Trennkammer 14, daß bei einer Undichtigkeit zwischen der Trennkammer 14 und einer der beiden angrenzenden Zylinderräume 7 oder 8 die Funktion des anderen Zylinderraums in keiner Weise beeinträchtigt wird und somit die Funktion des Lenksystems nicht beeinträchtigt wird.

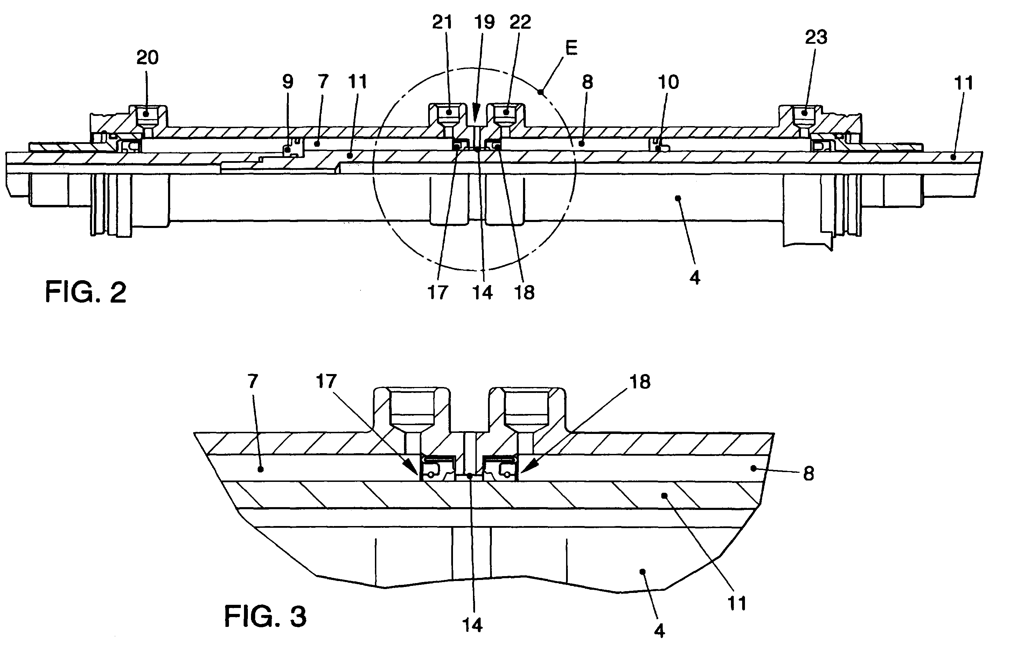

In Figur 2 ist das Stellteil 4 detailliert dargestellt. Die Trennkammer 14 ist mittels zweier Wellendichtungen 17, 18 gegenüber den Zylinderräumen 7, 8 abgedichtet. Die Ablaufleitung 15 von Figur 1 ist hier nicht dargestellt, jedoch kann diese an den zur Trennkammer 14 führenden Leitungskanal 19 angeschlossen werden. Die beiden Zylinderräume 7, 8 können über Hydraulikanschlüsse 20 bis 23 an die Hydraulikeinrichtungen 2, 3 (Figur 1) der beiden Hydraulikkreise A, B angeschlossen werden.

In Figur 3 ist die in Figur 2 markierte Einzelheit E vergrößert dargestellt, woraus insbesondere die Ausführung der Wellendichtungen 17, 18 ersichtlich sind.

Eine an einem der Wellendichtringe 17, 18 auftretende Undichtigkeit kann mittels einer hier nicht näher dargestellten Leckwarneinrichtung festgestellt werden, die an der Trennkammer 14 oder an der Ablaufleitung 15 (Figur 1) angeschlossen sein kann. Eine auftretende Undichtigkeit kann aber auch mittels Drucksensoren festgestellt werden, die eine Druckabweichung zwischen den beiden Zylinderräumen 7, 8 feststellen können und bei einer auftretenden unzulässigen Druckabweichung ein Fehlersignal oder eine Leckwarnanzeige auslösen.

### BEZUGSZEICHENLISTE

- 1: Lenkrad
- 2, 3: Hydraulikeinrichtungen
- 4: Stellteil
- 5, 6: Fahrzeugräder
- 7, 8: Zylinderräume
- 9, 10: Kolben
- 11: Kolbenstange
- 12, 13: Betätigungselemente
- 14: Trennkammer
- 15: Ablaufleitung
- 16: Tank
- 17, 18: Wellendichtungen
- 19: Leitungskanal
- 20 - 23: Hydraulikanschlüsse

## Patentansprüche

1. Hydraulisches Stellteil zur Betätigung der Lenkung von Kraftfahrzeugen, das eine Doppelzylindereinheit mit zwei gleichachsig angeordneten und durch eine gemeinsame Kolbenstange (11) zwangsgekoppelten Kolben (9, 10) bildet, die in hydraulisch separat ansteuerbaren und hintereinander angeordneten Zylinderräumen (7, 8) einliegen,
dadurch gekennzeichnet, daß
die Trennstelle zwischen den beiden Zylinderräumen (7, 8) als eine gegenüber den Zylinderräumen (7, 8) abgedichtete Trennkammer (14) ausgebildet ist.

2. Hydraulisches Stellteil nach Anspruch 1,
dadurch gekennzeichnet, daß
die Trennkammer (14) sich auf Umgebungsdruck oder einem anderen, von den Zylinderräumen (7, 8) unabhängigen Druckniveau befindet.

3. Hydraulisches Stellteil nach einem der Ansprüche 1 oder 2,
dadurch gekennzeichnet, daß
die Trennkammer (14) über eine Ablaufleitung (15) mit dem Tank (16) der Hydraulikeinrichtungen in Verbindung steht.

4. Hydraulisches Stellteil nach einem der vorhergehenden Ansprüche,
dadurch gekennzeichnet, daß
ein am Hydrauliksystem eines der Zylinderräume (7, 8) auftretender Druck- oder Hydraulikölverlust mittels Drucksensoren oder mittels einer Leckwarneinrichtung feststellbar ist.

5. Hydraulisches Stellteil nach einem der vorhergehenden Ansprüche,
dadurch gekennzeichnet, daß
die Trennkammer (14) mit jeweils einem die Kolbenstange (11) umfassenden Wellendichtring (17, 18) gegenüber den angrenzenden beiden Zylinderräumen (7, 8) abgedichtet ist.

6. Hydraulisches Stellteil nach einem der vorhergehenden Ansprüche,
dadurch gekennzeichnet, daß
an der Trennkammer (14) eine Leckwarneinrichtung angeschlossen ist.
